# EUROPEAN PATENT SPECIFICATION

(11) **EP 4 150 964 B1**
(45) Date of publication and mention of the grant of the patent: **10.12.2025**
(21) Application number: 20936012.2
(22) Date of filing: 11.05.2020
(51) Int. Cl.: H04B 7/0456, H04B 7/06, H04L 1/00, H04L 1/06

(54) **NETWORK NODE, TERMINAL DEVICE, AND METHODS THEREIN FOR RANK REPORT CONFIGURATION**
NETZWERKKNOTEN, ENDGERÄTEVORRICHTUNG UND VERFAHREN DARIN ZUR RANGMELDEKONFIGURATION
NOEUD DE RÉSEAU, DISPOSITIF TERMINAL ET PROCÉDÉS DE CONFIGURATION DE RAPPORT DE RANG

(43) Date of publication of application: 22.03.2023
(73) Proprietor: Telefonaktiebolaget LM Ericsson (PUBL), 164 83 Stockholm (SE)
(72) Inventor: WANG, Yi, Beijing 100102 (CN); GE, Zhi, Beijing 100102 (CN); ZHU, Huaisong, Beijing 100102 (CN)
(74) Representative: Ericsson
(86) International application number: PCT/CN2020/089609
(87) International publication number: WO 2021/226790

(56) References cited:
- WO-A1-2014/179917
- CN-A- 101 986 588
- CN-A- 102 739 342
- CN-A- 106 170 942
- CN-A- 110 601 733
- US-A1- 2013 301 560
- US-A1- 2014 355 468
- "3rd Generation Partnership Project; Technical Specification Group Radio Access Network; NR; Physical layer procedures for data (Release 16)", 1 April 2020 (2020-04-01), XP051868247, Retrieved from the Internet <URL:https://ftp.3gpp.org/tsg_ran/WG1_RL1/DRAFT/Clean_versions/38214-g10.zip 38214-g10.docx> [retrieved on 20200401]
- ZTE, SANECHIPS: "On CSI measurement", 3GPP DRAFT; R1-1715438 ON CSI MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Nagoya, Japan; 20170918 - 20170921, 17 September 2017 (2017-09-17), Mobile Competence Centre ; 650, route des Lucioles ; F-06921 Sophia-Antipolis Cedex ; France , XP051338906

## Description

### TECHNICAL FIELD

The present disclosure relates to wireless communications, and more particularly, to a network node, a terminal device, and methods therein for rank report configuration.

### BACKGROUND

In New Radio (NR) or the 5^{th} Generation (5G) wireless communication, a terminal device (e.g., a User Equipment, or UE) can be configured to carry out measurements and send measurement reports to a network node (e.g., a (next) generation NodeB, or gNB). In general, such measurements and reports are controlled by means of report configuration, e.g., Channel State Information (CSI) report configuration, or CSI-ReportConfig in the 3^{rd} Generation Partnership Project (3GPP) Technical Specification (TS) 38.213, V16.1.0.

The CSI-ReportConfig describes:
- the specific quantity or set of quantities to be reported;
- the downlink resource(s) on which measurements should be carried out in order to derive the quantity or quantities to be reported; and
- how the actual reporting is to be carried out, for example, when the reporting is to be done and what uplink physical channel to use for the reporting.

A CSI report configuration indicates a quantity or set of quantities that a terminal device is supposed to report. The CSI report may, for example, include different combinations of Channel Quality Indicator (CQI), Rank Indicator (RI), and Precoder Matrix Indicator (PMI), jointly referred to as CSI.

More specifically, a CSI report may contain one or more of the following quantities:
- Rank Indicator (RI), indicating what the terminal device believes is a suitable transmission rank, i.e., a suitable number of transmission layers for downlink transmission;
- Precoder Matrix Indicator (PMI), indicating what the terminal device believes is a suitable precoder matrix, given the selected transmission rank;
- Channel Quality Indicator (CQI), in practice indicating what the terminal device believes is a suitable channel coding rate and modulation scheme, given the selected precoder matrix.

US 2014/341119 A1 and WO 2011/051914 A1 each disclose a solution for overriding an RI reported from a UE in Long Term Evolution (LTE), when an evolved NodeB (eNB) believes the RI to be inaccurate.

US 2013/301560A1 discloses rank-specific feedback for improved MIMO support.

### SUMMARY

In NR, multiple antennas at network nodes and terminal devices support massive Multiple Input Multiple Output (MIMO) and flexible MIMO scheme applications. Massive MIMO provides network nodes with capabilities to support powerful and flexible spatial domain processing, and naturally support Multi-User MIMO (MU-MIMO), which is a key feature for capacity improvement in NR. MU-MIMO enables a network node to schedule multiple terminal devices at the same time and frequency resources, while fully relying on massive MIMO to distinguish the terminal devices from one another in the spatial domain.

In practice, a UE may sometimes fail to report the most suitable rank to a gNB, which will seriously affect the downlink throughput. There are various reasons for this, depending on UE/gNB implementations, especially when massive MIMO is introduced. For example, in a Time Division Duplex (TDD) system, especially a TDD massive MIMO system, a gNB tends to use reciprocity-based precoding for a data channel instead of codebook-based precoding. That is, the gNB uses a precoder based on its own calculation instead of the PMI reported from a UE. Since the precoder is invisible to the UE but have a great impact on a Signal to Interference plus Noise Ratio of the data channel, the RI and CQI in the CSI report from the UE may be inaccurate. Further, in NR the gNB can dynamically adjust transmission power at Physical Resource Block (PRB) level. There may be a case where multiple UEs are co-scheduled in same PRBs by means of spatial multiplexing, and the downlink transmission power will be split and shared among these UEs. This is also invisible to the UEs, which may result in an inaccurate rank report from each UE. Furthermore, due to the limitation in an SINR of a CSI Reference Signal (CSI-RS) or the UE's processing capability, the UE may obtain an inaccurate estimation result from the CSI-RS and report an inaccurate rank. In addition, the data channel and the CSI-RS may experience different interference levels. For example, the CSI-RS may collide with CSI-RSs from other cells, i.e., the interference from neighboring cells is always on, whereas the data channel may experience interference from neighboring cells only when there is data traffic in those cells.

When the UE fails to derive the correct rank for downlink transmission and the gNB strictly follows the rank reported from the UE, the network performance (e.g., throughput) will be degraded. However, since only the UE can detect the downlink interference, the gNB, in general, has to follow the UE's suggestion on the downlink transmission rank.

It is an object of the present disclosure to provide a network node, a terminal device, and methods therein for rank report configuration, capable of at least mitigating the problem of inaccurate rank reporting.

The invention is set out in the appended claims.

According to a first aspect of the present disclosure, a method in a network node is provided. The method includes: transmitting, to a terminal device, a first instruction to apply a first rank configuration; receiving, from the terminal device, a first report containing a first rank value and a first channel quality indication; and transmitting, to the terminal device, a second instruction to apply a second rank configuration in response to a mismatch between a Modulation and Coding Scheme (MCS) adjusted while transmitting data using the first rank value and the first channel quality indication. The second rank configuration indicates that the first rank value is forbidden to be reported.

In an embodiment, the first rank configuration may include a first RI restriction, and the first instruction may be an instruction to apply a first CSI report configuration containing the first RI restriction, and/or the second rank configuration may include a second RI restriction, and the second instruction may be an instruction to apply a second CSI report configuration containing the second RI restriction.

In an embodiment, the first instruction and/or the second instruction may be transmitted via Radio Resource Control (RRC) signaling or Downlink Control Information (DCI).

In an embodiment, the first report may be a first CSI report, the first rank value may be indicated by a first RI in the first CSI report, and the first channel quality indication may be a first CQI index indicated by a first CQI in the first CSI report.

In an embodiment, the mismatch may include one or more of: a difference between a code rate corresponding to the adjusted MCS and a code rate corresponding to the first channel quality indication exceeding a threshold, a difference between a throughput corresponding to the adjusted MCS and a throughput corresponding to the first channel quality indication exceeding a threshold, or a difference between a Signal to Interference plus Noise Ratio, SINR, corresponding to the adjusted MCS and an SINR corresponding to the first channel quality indication exceeding a threshold.

In an embodiment, when the code rate, throughput, or SINR corresponding to the adjusted MCS is higher than the code rate, throughput, or SINR corresponding to the first channel quality indication, the second rank configuration may indicate that the terminal device is only allowed to report a rank value selected from a set of rank values higher than the first rank value. When the code rate, throughput, or SINR corresponding to the adjusted MCS is lower than the code rate, throughput, or SINR corresponding to the first channel quality indication, the second rank configuration may indicate that the terminal device is only allowed to report a rank value selected from a set of rank values lower than the first rank value.

In an embodiment, the method may further include: receiving, from the terminal device, a second report containing a second rank value and a second channel quality indication; and transmitting the second instruction to the terminal device periodically, when a spectral efficiency or throughput calculated based on the second channel quality indication and the second rank value is higher than a spectral efficiency or throughput calculated based on the adjusted MCS and the first rank value.

In an embodiment, the second report may be a second CSI report, the second rank value may be indicated by a second RI in the second CSI report, and the second channel quality indication may be a second CQI index indicated by a second CQI in the second CSI report.

In an embodiment, the method may further include: transmitting, to the terminal device, a number of rank configurations including the first rank configuration and the second rank configuration, via RRC signaling.

In an embodiment, each of the number of rank configurations may include an RI restriction and may be transmitted in a CSI report configuration.

In an embodiment, the method may further include: determining the number of rank configurations based on capability information of the terminal device.

In an embodiment, the MCS may be adjusted based on one or more Hybrid Automatic Repeat reQuest (HARQ) feedbacks from the terminal device.

According to a second aspect of the present disclosure, a network node is provided. The network node includes: a transmitting unit configured to transmit, to a terminal device, a first instruction to apply a first rank configuration; and a receiving unit configured to receive, from the terminal device, a first report containing a first rank value and a first channel quality indication. The transmitting unit is further configured to transmit, to the terminal device, a second instruction to apply a second rank configuration in response to a mismatch between an MCS adjusted while transmitting data using the first rank value and the first channel quality indication. The second rank configuration indicates that the first rank value is forbidden to be reported.

The respective embodiments and features described above in connection with the first aspect also apply to the second aspect.

According to a third aspect of the present disclosure, a network node is provided. The network node includes a transceiver, a processor and a memory. The memory contains instructions executable by the processor whereby the network node is operative to: transmit, to a terminal device, a first instruction to apply a first rank configuration; receive, from the terminal device, a first report containing a first rank value and a first channel quality indication; and transmit, to the terminal device, a second instruction to apply a second rank configuration in response to a mismatch between an MCS adjusted while transmitting data using the first rank value and the first channel quality indication. The second rank configuration indicates that the first rank value is forbidden to be reported.

In an embodiment, the memory may further contain instructions executable by the processor whereby the network node is operative to perform the method according to the above first aspect.

According to a fourth aspect of the present disclosure, a computer readable storage medium is provided. The computer readable storage medium has computer program instructions stored thereon. The computer program instructions, when executed by a processor in a network node, cause the network node to: transmit, to a terminal device, a first instruction to apply a first rank configuration; receive, from the terminal device, a first report containing a first rank value and a first channel quality indication; and transmit, to the terminal device, a second instruction to apply a second rank configuration in response to a mismatch between an MCS adjusted while transmitting data using the first rank value and the first channel quality indication. The second rank configuration indicates that the first rank value is forbidden to be reported.

In an embodiment, the computer program instructions, when executed by the processor in the network node, may further cause the network node to perform the method according to the above first aspect.

According to a fifth aspect of the present disclosure, a method in a terminal device is provided. The method include: receiving, from a network node, a first instruction to apply a first rank configuration; transmitting, to the network node, a first report containing a first rank value based on the first rank configuration; and receiving, from the network node, a second instruction to apply a second rank configuration. The second rank configuration indicates that the first rank value is forbidden to be reported.

In an embodiment, the first rank configuration may include a first RI restriction, and the first instruction may be an instruction to apply a first CSI report configuration containing the first RI restriction, and/or the second rank configuration may include a second RI restriction, and the second instruction may be an instruction to apply a second CSI report configuration containing the second RI restriction.

In an embodiment, the first instruction and/or the second instruction may be received via RRC signaling or DCI.

In an embodiment, the first report may be a first CSI report, and the first rank value may be indicated by a first RI in the first CSI report.

In an embodiment, the method may further include: transmitting, to the network node, a second report containing a second rank value based on the second rank configuration; and receiving the second instruction from the network node periodically.

In an embodiment, the second report may be a second CSI report, and the second rank value may be indicated by a second RI in the second CSI report.

In an embodiment, the method may further include: receiving, from the network node, a number of rank configurations including the first rank configuration and the second rank configuration, via RRC signaling.

In an embodiment, each of the number of rank configurations may be an RI restriction and may be received in a CSI report configuration.

According to a sixth aspect of the present disclosure, a terminal device is provided. The terminal device includes: a receiving unit configured to receive, from a network node, a first instruction to apply a first rank configuration; and a transmitting unit configured to transmit, to the network node, a first report containing a first rank value based on the first rank configuration. The receiving unit is further configured to receive, from the network node, a second instruction to apply a second rank configuration. The second rank configuration indicates that the first rank value is forbidden to be reported.

The respective embodiments and features described above in connection with the fifth aspect also apply to the sixth aspect.

According to a seventh aspect of the present disclosure, a terminal device is provided. The terminal device includes a transceiver, a processor and a memory. The memory contains instructions executable by the processor whereby the terminal device is operative to: receive, from a network node, a first instruction to apply a first rank configuration; transmit, to the network node, a first report containing a first rank value based on the first rank configuration; and receive, from the network node, a second instruction to apply a second rank configuration. The second rank configuration indicates that the first rank value is forbidden to be reported.

In an embodiment, the memory may further contain instructions executable by the processor whereby the terminal device is operative to perform the method according to the above fifth aspect.

According to an eighth aspect of the present disclosure, a computer readable storage medium is provided. The computer readable storage medium has computer program instructions stored thereon. The computer program instructions, when executed by a processor in a terminal device, cause the terminal device to: receive, from a network node, a first instruction to apply a first rank configuration; transmit, to the network node, a first report containing a first rank value based on the first rank configuration; and receive, from the network node, a second instruction to apply a second rank configuration. The second rank configuration indicates that the first rank value is forbidden to be reported.

In an embodiment, the computer program instructions, when executed by the processor in the terminal device, may further cause the terminal device to perform the method according to the above fifth aspect.

With the embodiments of the present disclosure, in response to a mismatch between an MCS adjusted while transmitting data using a rank value reported from a terminal device and a channel quality indication reported from the terminal device, a network node can transmit to the terminal device an instruction to apply a rank configuration indicating that the rank value is forbidden to be reported. That is, when the network node determines from the mismatch that the rank value reported from the terminal device may be inaccurate or incorrect, it can force the terminal device to report a different rank value. In this way, the problem of inaccurate rank reporting can be at least mitigated, while the network node still relies on rank reporting from the terminal device, without applying rank override simply based on a blind guess.

### BRIEF DESCRIPTION OF THE DRAWINGS

The above and other objects, features and advantages will be more apparent from the following description of embodiments with reference to the figures, in which:
- Fig. 1: is a flowchart illustrating a method in a network node according to an embodiment of the present disclosure;
- Fig. 2: is a flowchart illustrating a method in a terminal device according to an embodiment of the present disclosure;
- Fig. 3: is a sequence diagram of an example of rank report configuration according to an embodiment of the present disclosure;
- Fig. 4: is a block diagram of a network node according to an embodiment of the present disclosure;
- Fig. 5: is a block diagram of a network node according to another embodiment of the present disclosure;
- Fig. 6: is a block diagram of a terminal device according to an embodiment of the present disclosure;
- Fig. 7: is a block diagram of a terminal device according to another embodiment of the present disclosure;
- Fig. 8: schematically illustrates a telecommunication network connected via an intermediate network to a host computer;
- Fig. 9: is a generalized block diagram of a host computer communicating via a base station with a user equipment over a partially wireless connection; and
- Figs. 10 to 13: are flowcharts illustrating methods implemented in a communication system including a host computer, a base station and a user equipment.

### DETAILED DESCRIPTION

As used herein, the term "wireless communication network" refers to a network following any suitable communication standards, such as NR, LTE-Advanced (LTE-A), LTE, Wideband Code Division Multiple Access (WCDMA), High-Speed Packet Access (HSPA), and so on. Furthermore, the communications between a terminal device and a network node in the wireless communication network may be performed according to any suitable generation communication protocols, including, but not limited to, Global System for Mobile Communications (GSM), Universal Mobile Telecommunications System (UMTS), Long Term Evolution (LTE), and/or other suitable 1G (the first generation), 2G (the second generation), 2.5G, 2.75G, 3G (the third generation), 4G (the fourth generation), 4.5G, 5G (the fifth generation) communication protocols, wireless local area network (WLAN) standards, such as the IEEE 802.11 standards; and/or any other appropriate wireless communication standard, such as the Worldwide Interoperability for Microwave Access (WiMax), Bluetooth, and/or ZigBee standards, and/or any other protocols either currently known or to be developed in the future.

The term "network node" or "network device" refers to a device in a wireless communication network via which a terminal device accesses the network and receives services therefrom. The network node or network node refers to a base station (BS), an access point (AP), or any other suitable device in the wireless communication network. The BS may be, for example, a node B (NodeB or NB), an evolved NodeB (eNodeB or eNB), or a (next) generation (gNB), a Remote Radio Unit (RRU), a radio header (RH), a remote radio head (RRH), a relay, a low power node such as a femto, a pico, and so forth. Yet further examples of the network node may include multi-standard radio (MSR) radio equipment such as MSR BSs, network controllers such as radio network controllers (RNCs) or base station controllers (BSCs), base transceiver stations (BTSs), transmission points, transmission nodes. More generally, however, the network node may represent any suitable device (or group of devices) capable, configured, arranged, and/or operable to enable and/or provide a terminal device access to the wireless communication network or to provide some service to a terminal device that has accessed the wireless communication network.

The term "terminal device" refers to any end device that can access a wireless communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, portable computers, desktop computers, image capture terminal devices such as digital cameras, gaming terminal devices, music storage and playback appliances, a mobile phone, a cellular phone, a smart phone, voice over IP (VoIP) phones, wireless local loop phones, tablets, personal digital assistants (PDAs), wearable terminal devices, vehicle-mounted wireless terminal devices, wireless endpoints, mobile stations, laptop-embedded equipment (LEE), laptop-mounted equipment (LME), USB dongles, smart devices, wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3rd Generation Partnership Project (3GPP), such as 3GPP's GSM, UMTS, LTE, and/or 5G standards. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the wireless communication network. Instead, a UE may represent a device that is intended for sale to, or operation by, a human user but that may not initially be associated with a specific human user.

The terminal device may support device-to-device (D2D) communication, for example by implementing a 3GPP standard for sidelink communication, and may in this case be referred to as a D2D communication device.

As yet another example, in an Internet of Things (IOT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-loT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

As used herein, a downlink transmission refers to a transmission from the network node to a terminal device, and an uplink transmission refers to a transmission in an opposite direction.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms. The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

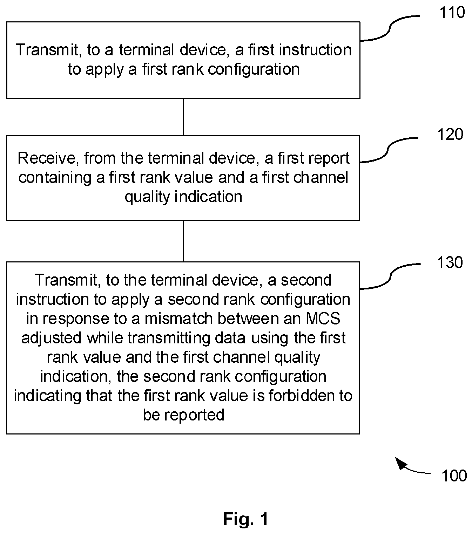

Fig. 1 is a flowchart illustrating a method 100 according to an embodiment of the present disclosure. The method 100 can be performed at a network node, e.g., a gNB.

At block 110, a first instruction to apply a first rank configuration is transmitted to a terminal device (e.g., a UE). Here, the first rank configuration may include a first RI restriction, and the first instruction may be an instruction to apply a first CSI report configuration containing the first RI restriction. For example, *type1-SinglePanel-ri-Restriction* in *CSI-ReportConfig,* as defined in 3GPP TS 38.214, V16.1.0 can be used as the rank configuration (RI restriction) here:
*For UE configured with higher layer parameter codebookType set to 'typel-SinglePanel', the bitmap parameter typel-SinglePanel-ri-Restriction forms the bit sequence r*₇*,...,r*₁*,r*₀ *where r*₀ *is the LSB and r*₇ *is the MSB. When rᵢ is zero, i* ∈ {0,1, ..., 7}, *PMI and RI reporting are not allowed to correspond to any precoder associated with υ = i + 1 layers.*

In other words, the first rank configuration or RI restriction can be a bitmap in which each bit corresponds to a candidate RI, with any "0" indicating that reporting of its corresponding RI is not allowed and any "1" indicating that reporting of its corresponding RI is allowed.

The first instruction may be transmitted via RRC signaling or DCI (e.g., DCI Format 0_1).

At block 120, a first report containing a first rank value and a first channel quality indication is received from the terminal device. Here, the first report may be a first CSI report. The first rank value may be indicated by a first RI in the first CSI report. The first channel quality indication may be a first CQI index indicated by a first CQI in the first CSI report.

After receiving the first report in the block 120, the network node applies outer-loop link adaptation, i.e., adjusting an MCS while transmitting data using the first rank value over a data channel, based on one or more Hybrid Automatic Repeat reQuest (HARQ) feedbacks from the terminal device.

At block 130, a second instruction to apply a second rank configuration is transmitted to the terminal device, in response to a mismatch between the adjusted MCS and the first channel quality indication. The second rank configuration indicates that the first rank value is forbidden to be reported.

Here, the second rank configuration may include a second RI restriction, and the second instruction may be an instruction to apply a second CSI report configuration containing the second RI restriction. Similarly to the above first rank configuration or RI restriction, the second rank configuration or RI restriction may be a bitmap and may be e.g., *type1-SinglePanel-ri-Restriction* in CSI-*ReportConfig.* The second instruction may be transmitted via RRC signaling or DCI (e.g., DCI Format 0_1).

In an example, the mismatch may include a difference between a code rate (or normalized code rate) corresponding to the adjusted MCS and a code rate (or normalized code rate) corresponding to the first channel quality indication exceeding a threshold. Additionally or alternatively, the mismatch may include a difference between a throughput corresponding to the adjusted MCS and a throughput corresponding to the first channel quality indication exceeding a threshold. Additionally or alternatively, the mismatch may include a difference between a Signal to Interference plus Noise Ratio (SINR) corresponding to the adjusted MCS and an SINR corresponding to the first channel quality indication exceeding a threshold. This mismatch reflects a deviation between an actual radio link quality the terminal device is experiencing and a radio link quality the terminal device believes it is experiencing.

Referring to 3GPP TS 38.214, V16.1.0, code rates (and spectral efficiencies) corresponding to CQI indices and MCS indices are given in Table 1 and Table 2 below.

**Table 1**

| **CQI index** | **modulation** | **code rate x 1024** | **efficiency** |
|---|---|---|---|
| 0 | out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

**Table 2**

| **MCS Index *I_{MCS}*** | **Modulation Order *Qₘ*** | **Target code Rate *R* x [1024]** | **Spectral efficiency** |
|---|---|---|---|
| **0** | 2 | 120 | 0.2344 |
| **1** | 2 | 193 | 0.3770 |
| **2** | 2 | 308 | 0.6016 |
| **3** | 2 | 449 | 0.8770 |
| **4** | 2 | 602 | 1.1758 |
| **5** | 4 | 378 | 1.4766 |
| **6** | 4 | 434 | 1.6953 |
| **7** | 4 | 490 | 1.9141 |
| **8** | 4 | 553 | 2.1602 |
| **9** | 4 | 616 | 2.4063 |
| **10** | 4 | 658 | 2.5703 |
| **11** | 6 | 466 | 2.7305 |
| **12** | 6 | 517 | 3.0293 |
| **13** | 6 | 567 | 3.3223 |
| **14** | 6 | 616 | 3.6094 |
| **15** | 6 | 666 | 3.9023 |
| **16** | 6 | 719 | 4.2129 |
| **17** | 6 | 772 | 4.5234 |
| **18** | 6 | 822 | 4.8164 |
| **19** | 6 | 873 | 5.1152 |
| **20** | 8 | 682.5 | 5.3320 |
| **21** | 8 | 711 | 5.5547 |
| **22** | 8 | 754 | 5.8906 |
| **23** | 8 | 797 | 6.2266 |
| **24** | 8 | 841 | 6.5703 |
| **25** | 8 | 885 | 6.9141 |
| **26** | 8 | 916.5 | 7.1602 |
| **27** | 8 | 948 | 7.4063 |
| **28** | 2 | reserved | |
| **29** | 4 | reserved | |
| **30** | 6 | reserved | |
| **31** | 8 | reserved | |

In an example, when the code rate, throughput, or SINR corresponding to the adjusted MCS is higher than the code rate, throughput, or SINR corresponding to the first channel quality indication, the second rank configuration may indicate that the terminal device is only allowed to report a rank value selected from a set of rank values higher than the first rank value. On the other hand, when the code rate, throughput, or SINR corresponding to the adjusted MCS is lower than the code rate, throughput, or SINR corresponding to the first channel quality indication, the second rank configuration may indicate that the terminal device is only allowed to report a rank value selected from a set of rank values lower than the first rank value. That is, when the network node determines that the first rank value reported from the terminal device is too conservative (i.e., the terminal device underestimates the SINR of the data channel), it can force the terminal device to report a higher rank. When the network node determines that the first rank value reported from the terminal device is too aggressive (i.e., the terminal device overestimates the SINR of the data channel), it can force the terminal device to report a lower rank.

In an example, e.g., after the block 130, the network node can receive, from the terminal device, a second report containing a second rank value and a second channel quality indication. Here, the second report may be a second CSI report, the second rank value may be indicated by a second RI in the second CSI report, and the second channel quality indication may be a second CQI index indicated by a second CQI in the second CSI report. When a spectral efficiency or throughput calculated based on the second channel quality indication and the second rank value is higher than a spectral efficiency or throughput calculated based on the adjusted MCS and the first rank value, the network node can transmit the second instruction to the terminal device periodically (via RRC signaling or DCI). For example, the spectral efficiency calculated based on the second channel quality indication, denoted as E2, can be formulated as: E2 = E_{CQI}*r₂, where E_{CQI} denotes the spectral efficiency (for one layer) corresponding to the second CQI index in Table 1, and r₂ denotes the second rank value. Likewise, the spectral efficiency calculated based on the adjusted MCS and the first rank value, denoted as E1, can be formulated as: E1 = E_{MCS}*r₁, where E_{MCS} denotes the spectral efficiency (for one layer) corresponding to the adjusted MCS in Table 2, and r₁ denotes the first rank value. When E2>E1, the network node can determine that the second RI restriction works properly and can then periodically trigger rank reporting from the terminal device according to the second RI restriction. When E2<E1, the network node may allow the terminal device to at least report the first rank value again.

In an example, e.g., before the block 110, the network node can transmit to the terminal device a number of rank configurations, including the first rank configuration and the second rank configuration, via RRC signaling (e.g., RRCReconfiguration). Each of the number of rank configurations may include an RI restriction (e.g., *type1-SinglePanel-ri-Restriction*) and may be transmitted in a CSI report configuration. For example, the number of rank configurations can be determined based on capability information of the terminal device. The capability information may indicate a maximum number of spatial multiplexing layers supported by the terminal device. For example, the capability information may be *maxNumberMIMO-LayersPDSCH* and/or *maxNumberAperiodicCSI-PerBWP-ForCSI-Report* as defined in 3GPP TS 38.331, V16.0.0. For example, when the terminal device can support four layers at maximum, up to fifteen different rank configurations can be provided, e.g., *type1-SinglePanel-ri-Restriction* ranging from *00000001* (only rank 1 is allowed to be reported) to *00001111* (all ranks 1~4 are allowed to be reported).

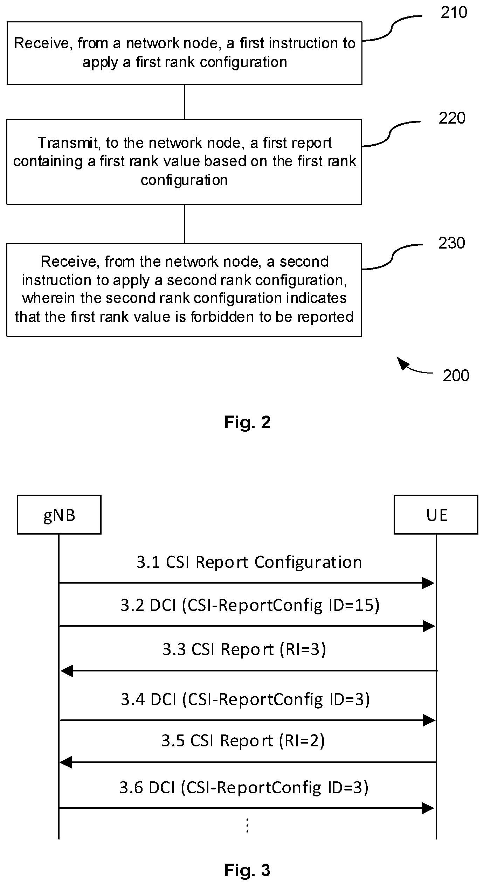

Fig. 2 is a flowchart illustrating a method 200 according to an embodiment of the present disclosure. The method 200 can be performed at a terminal device, e.g., a UE.

At block 210, a first instruction to apply a first rank configuration is received from a network node. Here, the first rank configuration may include a first RI restriction (e.g., *type1-SinglePanel-ri-Restriction*)*,* and the first instruction may be an instruction to apply a first CSI report configuration containing the first RI restriction. The first instruction may be received via RRC signaling or DCI (e.g., DCI Format 0_1).

At block 220, a first report containing a first rank value based on the first rank configuration is transmitted to the network node. Here, the first report may be a first CSI report, and the first rank value may be indicated by a first RI in the first CSI report.

At block 230, a second instruction to apply a second rank configuration is received from the network node. The second rank configuration indicates that the first rank value is forbidden to be reported. Here, the second rank configuration may include a second RI restriction (e.g., *type1-SinglePanel-ri-Restriction*)*,* and the second instruction may be an instruction to apply a second CSI report configuration containing the second RI restriction. The second instruction may be received via RRC signaling or DCI (e.g., DCI Format 0_1).

In an example, e.g., after the block 230, the terminal device can transmit, to the network node, a second report containing a second rank value based on the second rank configuration, and receive the second instruction from the network node periodically (via RRC signaling or DCI). Here, the second report may be a second CSI report, and the second rank value may be indicated by a second RI in the second CSI report.

In an example, e.g., before the block 210, the terminal device can receive from the network node, a number of rank configurations including the first rank configuration and the second rank configuration, via RRC signaling. Here, each of the number of rank configurations may include an RI restriction (e.g., *type1-SinglePanel-ri-Restriction)* and may be received in a CSI report configuration.

The above methods 100 and 200 will be explained below with reference to Fig. 3, which is a sequence diagram of an example of rank report configuration. It is assumed here that the maximum rank value can be supported by a network node (e.g., a gNB) and a terminal device (e.g., a UE) is 4, without loss of generality, and accordingly possible RI restrictions (e.g., *type1-SinglePanel-ri-Restriction*) may range from *00000001* (only rank 1 is allowed to be reported) to *00001111* (all ranks 1~4 are allowed to be reported).

At 3.1, the gNB transmits a number of CSI report configurations to the UE, e.g., in an RRCReconfiguration message, for semi-persistent or aperiodic CSI reports. This normally occurs at initial access of the UE and typically the configurations will not change until the UE moves to a different cell. The gNB may configure up to 48 different CSI report configurations for the UE. It is assumed here that the RRCReconfiguration message includes e.g., fifteen CSI-ReportConfig Information Elements (IEs), each corresponding to one CSI report configuration. Each CSI report configuration has a unique identifier (ID), e.g., 1~15, and contains a unique RI restriction (e.g., *type1-SinglePanel-ri-Restriction 00000001* ~ *00001111).* Each CSI report configuration may be associated with a CSI-RS source configuration (e.g., a start Physical Resource Block (PRB), a PRB length, etc.). At 3.2, the gNB transmits DCI (e.g., DCI Format 0_1) to the UE, instructing the UE to apply the CSI report configuration ID=15, corresponding to RI restriction *00001111* (i.e., all ranks 1~4 are allowed to be reported). At 3.3, the UE transmits a CSI report based on the CSI report configuration ID=15 to the gNB. The CSI report contains e.g., RI=3 and CQI=12 (corresponding to a code rate of 5.5547, see the above Table 1).

After receiving the CSI report, the gNB selects MCS Index=21 based on the CSI report (see the above Table 2) and applies an outer-loop link adaptation, i.e., adjusting the MCS, based on HARQ ACK/NACK feedbacks from the UE on a per Transmission Time Interval (TTI) basis. For example, in TTI 1, the gNB uses MCS Index=21 and the rank of 3 for transmitting data to the UE, but receives an NACK indicating that the UE fails to decode the data. In this case, the gNB lowers the code rate, e.g., to 5.3320 and accordingly adjusts the MCS to MCS Index 20. In TTI 2, the gNB uses MCS Index=20 and the rank of 3 for transmitting data to the UE, but receives an NACK indicating that the UE fails to decode the data. In this case, the gNB further lowers the code rate, e.g., to 5.1152 and accordingly adjusts the MCS to MCS Index 19. In TTI 3, the gNB uses MCS Index=19 and the rank of 3 for transmitting data to the UE, but receives an NACK indicating that the UE fails to decode the data. It is assumed here that the gNB keeps lowering the coding rate and the MCS and the UE keeps failing to decode the data, until in TTI 19 the gNB uses MCS Index=10 (code rate 2.5703) and the rank of 3 for transmitting data to the UE and receives an ACK indicating that the UE has successfully decoded the data. In this case, as a difference between the code rate 5.5547 corresponding to CQI=12 reported from the UE and the code rate 2.5703 corresponding to MCS Index=10 exceeds a threshold (e.g., 5.5547/2.5703 > 2), the gNB reasonably assumes that the rank of 3 may be incorrect (e.g., too aggressive) and decides to force the UE to report a different (lower) rank. It is to be noted here that the "difference" here may be measured by a difference or equivalently a ratio between the code rates, depending on whether a linear or a decibel domain is used.

Thus, at 3.4, the gNB transmits DCI (e.g., DCI Format 0_1) to the UE, instructing the UE to apply the CSI report configuration ID=3, corresponding to RI restriction *00000011* (i.e., only ranks 1 and 2 are allowed to be reported and ranks 3 and 4 are forbidden). At 3.5, the UE transmits a CSI report based on the CSI report configuration ID=3 to the gNB. The CSI report contains e.g., RI=2 and CQI=13 (corresponding to a code rate of 6.2266, see the above Table 1). As described above, the gNB calculates E2=6.2266*2 > E1=2.5703*3. Thus, the gNB determines that RI=2 is proper and then transmits DCI containing CSI report configuration ID=3 to the UE periodically, such that the UE can report a correct RI accordingly.

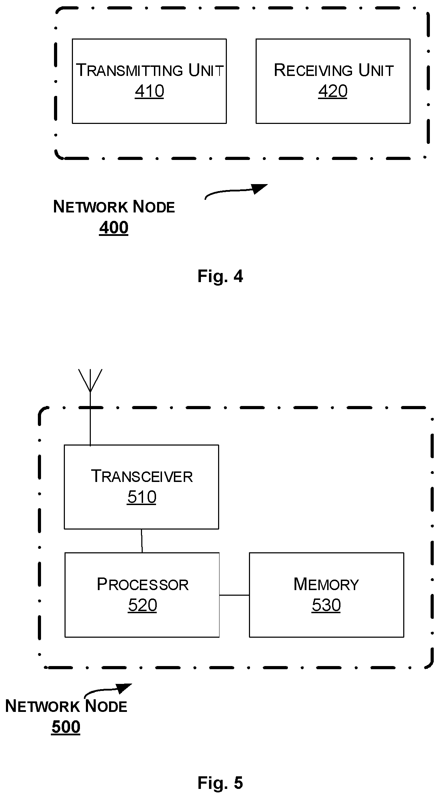

Correspondingly to the method 100 as described above, a network node is provided. Fig. 4 is a block diagram of a network node 400 according to an embodiment of the present disclosure.

As shown in Fig. 4, the network node 400 includes a transmitting unit 410 configured to transmit, to a terminal device, a first instruction to apply a first rank configuration. The network node 400 further includes a receiving unit 420 configured to receive, from the terminal device, a first report containing a first rank value and a first channel quality indication. The transmitting unit 410 is further configured to transmit, to the terminal device, a second instruction to apply a second rank configuration in response to a mismatch between an MCS adjusted while transmitting data using the first rank value and the first channel quality indication. The second rank configuration indicates that the first rank value is forbidden to be reported.

In an embodiment, the first rank configuration may include a first RI restriction, and the first instruction may be an instruction to apply a first CSI report configuration containing the first RI restriction, and/or the second rank configuration may include a second RI restriction, and the second instruction may be an instruction to apply a second CSI report configuration containing the second RI restriction.

In an embodiment, the first instruction and/or the second instruction may be transmitted via Radio Resource Control (RRC) signaling or Downlink Control Information (DCI).

In an embodiment, the first report may be a first CSI report, the first rank value may be indicated by a first RI in the first CSI report, and the first channel quality indication may be a first CQI index indicated by a first CQI in the first CSI report.

In an embodiment, the mismatch may include one or more of: a difference between a code rate corresponding to the adjusted MCS and a code rate corresponding to the first channel quality indication exceeding a threshold, a difference between a throughput corresponding to the adjusted MCS and a throughput corresponding to the first channel quality indication exceeding a threshold, or a difference between a Signal to Interference plus Noise Ratio, SINR, corresponding to the adjusted MCS and an SINR corresponding to the first channel quality indication exceeding a threshold.

In an embodiment, when the code rate, throughput, or SINR corresponding to the adjusted MCS is higher than the code rate, throughput, or SINR corresponding to the first channel quality indication, the second rank configuration may indicate that the terminal device is only allowed to report a rank value selected from a set of rank values higher than the first rank value. When the code rate, throughput, or SINR corresponding to the adjusted MCS is lower than the code rate, throughput, or SINR corresponding to the first channel quality indication, the second rank configuration may indicate that the terminal device is only allowed to report a rank value selected from a set of rank values lower than the first rank value.

In an embodiment, the receiving unit 420 may be further configured to receive, from the terminal device, a second report containing a second rank value and a second channel quality indication. The transmitting unit 410 may be further configured to transmit the second instruction to the terminal device periodically, when a spectral efficiency or throughput calculated based on the second channel quality indication and the second rank value is higher than a spectral efficiency or throughput calculated based on the adjusted MCS and the first rank value.

In an embodiment, the second report may be a second CSI report, the second rank value may be indicated by a second RI in the second CSI report, and the second channel quality indication may be a second CQI index indicated by a second CQI in the second CSI report.

In an embodiment, the transmitting unit 410 may be further configured to transmit, to the terminal device, a number of rank configurations including the first rank configuration and the second rank configuration, via RRC signaling.

In an embodiment, each of the number of rank configurations may include an RI restriction and may be transmitted in a CSI report configuration.

In an embodiment, the network node 400 may further include a determining unit configured to determine the number of rank configurations based on capability information of the terminal device.

In an embodiment, the MCS may be adjusted based on one or more Hybrid Automatic Repeat reQuest (HARQ) feedbacks from the terminal device.

The units 410 and 420 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 1.

Fig. 5 is a block diagram of a network node 500 according to another embodiment of the present disclosure.

The network node 500 includes a transceiver 510, a processor 520 and a memory 530. The memory 530 contains instructions executable by the processor 520 whereby the network node 500 is operative to perform the actions, e.g., of the procedure described earlier in conjunction with Fig. 1. Particularly, the memory 530 contains instructions executable by the processor 520 whereby the network node 500 is operative to: transmit, to a terminal device, a first instruction to apply a first rank configuration; receive, from the terminal device, a first report containing a first rank value and a first channel quality indication; and transmit, to the terminal device, a second instruction to apply a second rank configuration in response to a mismatch between an MCS adjusted while transmitting data using the first rank value and the first channel quality indication. The second rank configuration indicates that the first rank value is forbidden to be reported.

In an embodiment, the first rank configuration may include a first RI restriction, and the first instruction may be an instruction to apply a first CSI report configuration containing the first RI restriction, and/or the second rank configuration may include a second RI restriction, and the second instruction may be an instruction to apply a second CSI report configuration containing the second RI restriction.

In an embodiment, the first instruction and/or the second instruction may be transmitted via Radio Resource Control (RRC) signaling or Downlink Control Information (DCI).

In an embodiment, the first report may be a first CSI report, the first rank value may be indicated by a first RI in the first CSI report, and the first channel quality indication may be a first CQI index indicated by a first CQI in the first CSI report.

In an embodiment, the mismatch may include one or more of: a difference between a code rate corresponding to the adjusted MCS and a code rate corresponding to the first channel quality indication exceeding a threshold, a difference between a throughput corresponding to the adjusted MCS and a throughput corresponding to the first channel quality indication exceeding a threshold, or a difference between a Signal to Interference plus Noise Ratio, SINR, corresponding to the adjusted MCS and an SINR corresponding to the first channel quality indication exceeding a threshold.

In an embodiment, when the code rate, throughput, or SINR corresponding to the adjusted MCS is higher than the code rate, throughput, or SINR corresponding to the first channel quality indication, the second rank configuration may indicate that the terminal device is only allowed to report a rank value selected from a set of rank values higher than the first rank value. When the code rate, throughput, or SINR corresponding to the adjusted MCS is lower than the code rate, throughput, or SINR corresponding to the first channel quality indication, the second rank configuration may indicate that the terminal device is only allowed to report a rank value selected from a set of rank values lower than the first rank value.

In an embodiment, the memory 530 may further contain instructions executable by the processor 520 whereby the network node 500 is operative to: receive, from the terminal device, a second report containing a second rank value and a second channel quality indication; and transmit the second instruction to the terminal device periodically, when a spectral efficiency or throughput calculated based on the second channel quality indication and the second rank value is higher than a spectral efficiency or throughput calculated based on the adjusted MCS and the first rank value.

In an embodiment, the second report may be a second CSI report, the second rank value may be indicated by a second RI in the second CSI report, and the second channel quality indication may be a second CQI index indicated by a second CQI in the second CSI report.

In an embodiment, the memory 530 may further contain instructions executable by the processor 520 whereby the network node 500 is operative to: transmit, to the terminal device, a number of rank configurations including the first rank configuration and the second rank configuration, via RRC signaling.

In an embodiment, each of the number of rank configurations may include an RI restriction and may be transmitted in a CSI report configuration.

In an embodiment, the memory 530 may further contain instructions executable by the processor 520 whereby the network node 500 is operative to: determine the number of rank configurations based on capability information of the terminal device.

In an embodiment, the MCS may be adjusted based on one or more Hybrid Automatic Repeat reQuest (HARQ) feedbacks from the terminal device.

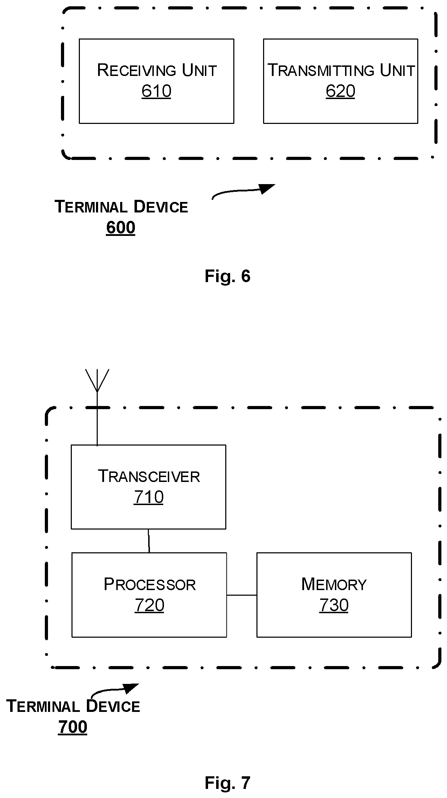

Correspondingly to the method 200 as described above, a terminal device is provided. Fig. 6 is a block diagram of a terminal device 600 according to an embodiment of the present disclosure.

As shown in Fig. 6, the terminal device 600 includes a receiving unit 610 configured to receive, from a network node, a first instruction to apply a first rank configuration. The terminal device 600 further includes a transmitting unit 620 configured to transmit, to the network node, a first report containing a first rank value based on the first rank configuration. The receiving unit 610 is further configured to receive, from the network node, a second instruction to apply a second rank configuration. The second rank configuration indicates that the first rank value is forbidden to be reported.

In an embodiment, the first rank configuration may include a first RI restriction, and the first instruction may be an instruction to apply a first CSI report configuration containing the first RI restriction, and/or the second rank configuration may include a second RI restriction, and the second instruction may be an instruction to apply a second CSI report configuration containing the second RI restriction.

In an embodiment, the first instruction and/or the second instruction may be received via RRC signaling or DCI.

In an embodiment, the first report may be a first CSI report, and the first rank value may be indicated by a first RI in the first CSI report.

In an embodiment, the transmitting unit 620 may be further configured to transmit, to the network node, a second report containing a second rank value based on the second rank configuration. The receiving unit 610 may be further configured to receive the second instruction from the network node periodically.

In an embodiment, the second report may be a second CSI report, and the second rank value may be indicated by a second RI in the second CSI report.

In an embodiment, the receiving unit 610 may be further configured to receive, from the network node, a number of rank configurations including the first rank configuration and the second rank configuration, via RRC signaling.

In an embodiment, each of the number of rank configurations may be an RI restriction and may be received in a CSI report configuration.

The units 610 and 620 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 2.

Fig. 7 is a block diagram of a terminal device 700 according to another embodiment of the present disclosure.

The terminal device 700 includes a transceiver 710, a processor 720 and a memory 730. The memory 730 contains instructions executable by the processor 720 whereby the terminal device 700 is operative to perform the actions, e.g., of the procedure described earlier in conjunction with Fig. 2. Particularly, the memory 730 contains instructions executable by the processor 720 whereby the terminal device 700 is operative to: receive, from a network node, a first instruction to apply a first rank configuration; transmit, to the network node, a first report containing a first rank value based on the first rank configuration; and receive, from the network node, a second instruction to apply a second rank configuration. The second rank configuration indicates that the first rank value is forbidden to be reported.

In an embodiment, the first rank configuration may include a first RI restriction, and the first instruction may be an instruction to apply a first CSI report configuration containing the first RI restriction, and/or the second rank configuration may include a second RI restriction, and the second instruction may be an instruction to apply a second CSI report configuration containing the second RI restriction.

In an embodiment, the first instruction and/or the second instruction may be received via RRC signaling or DCI.

In an embodiment, the first report may be a first CSI report, and the first rank value may be indicated by a first RI in the first CSI report.

In an embodiment, the memory 730 may further contain instructions executable by the processor 720 whereby the terminal device 700 is operative to: transmit, to the network node, a second report containing a second rank value based on the second rank configuration; and receive the second instruction from the network node periodically.

In an embodiment, the second report may be a second CSI report, and the second rank value may be indicated by a second RI in the second CSI report.

In an embodiment, the memory 730 may further contain instructions executable by the processor 720 whereby the terminal device 700 is operative to: receive, from the network node, a number of rank configurations including the first rank configuration and the second rank configuration, via RRC signaling.

In an embodiment, each of the number of rank configurations may be an RI restriction and may be received in a CSI report configuration.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 520 causes the network node 500 to perform the actions, e.g., of the procedure described earlier in conjunction with Fig. 1; or code/computer readable instructions, which when executed by the processor 720 causes the terminal device 700 to perform the actions, e.g., of the procedure described earlier in conjunction with Fig. 2.

The computer program product may be configured as a computer program code structured in computer program modules. The computer program modules could essentially perform the actions of the flow illustrated in Fig. 1 or 2.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

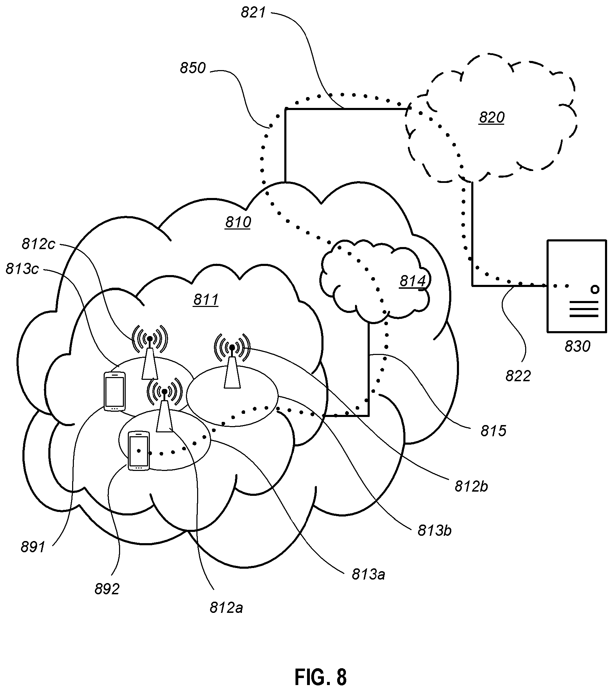

With reference to Fig. 8, in accordance with an embodiment, a communication system includes a telecommunication network 810, such as a 3GPP-type cellular network, which comprises an access network 811, such as a radio access network, and a core network 814. The access network 811 comprises a plurality of base stations 812a, 812b, 812c, such as NBs, eNBs, gNBs or other types of wireless access points, each defining a corresponding coverage area 813a, 813b, 813c. Each base station 812a, 812b, 812c is connectable to the core network 814 over a wired or wireless connection 815. A first UE 891 located in a coverage area 813c is configured to wirelessly connect to, or be paged by, the corresponding base station 812c. A second UE 892 in a coverage area 813a is wirelessly connectable to the corresponding base station 812a. While a plurality of UEs 891, 892 are illustrated in this example, the disclosed embodiments are equally applicable to a situation where a sole UE is in the coverage area or where a sole UE is connecting to the corresponding base station 812.

The telecommunication network 810 is itself connected to a host computer 830, which may be embodied in the hardware and/or software of a standalone server, a cloud-implemented server, a distributed server or as processing resources in a server farm. The host computer 830 may be under the ownership or control of a service provider, or may be operated by the service provider or on behalf of the service provider. Connections 821 and 822 between the telecommunication network 810 and the host computer 830 may extend directly from the core network 814 to the host computer 830 or may go via an optional intermediate network 820. An intermediate network 820 may be one of, or a combination of more than one of, a public, private or hosted network; the intermediate network 820, if any, may be a backbone network or the Internet; in particular, the intermediate network 820 may comprise two or more sub-networks (not shown).

The communication system of Fig. 8 as a whole enables connectivity between the connected UEs 891, 892 and the host computer 830. The connectivity may be described as an over-the-top (OTT) connection 850. The host computer 830 and the connected UEs 891, 892 are configured to communicate data and/or signaling via the OTT connection 850, using the access network 811, the core network 814, any intermediate network 820 and possible further infrastructure (not shown) as intermediaries. The OTT connection 850 may be transparent in the sense that the participating communication devices through which the OTT connection 850 passes are unaware of routing of uplink and downlink communications. For example, the base station 812 may not or need not be informed about the past routing of an incoming downlink communication with data originating from the host computer 830 to be forwarded (e.g., handed over) to a connected UE 891. Similarly, the base station 812 need not be aware of the future routing of an outgoing uplink communication originating from the UE 891 towards the host computer 830.

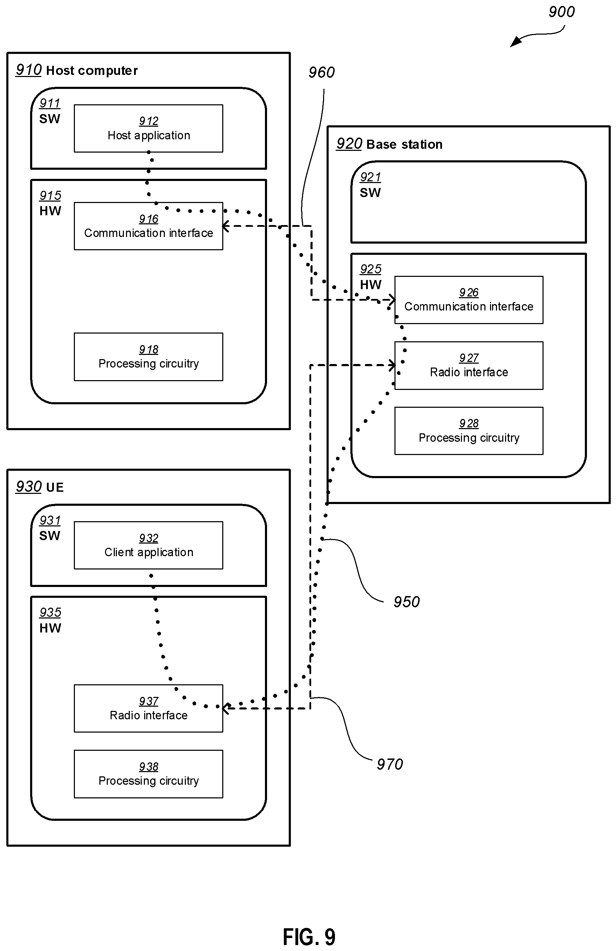

Example implementations, in accordance with an embodiment, of the UE, base station and host computer discussed in the preceding paragraphs will now be described with reference to Fig. 9. In a communication system 900, a host computer 910 comprises hardware 915 including a communication interface 916 configured to set up and maintain a wired or wireless connection with an interface of a different communication device of the communication system 900. The host computer 910 further comprises a processing circuitry 918, which may have storage and/or processing capabilities. In particular, the processing circuitry 918 may comprise one or more programmable processors, application-specific integrated circuits, field programmable gate arrays or combinations of these (not shown) adapted to execute instructions. The host computer 910 further comprises software 911, which is stored in or accessible by the host computer 910 and executable by the processing circuitry 918. The software 911 includes a host application 912. The host application 912 may be operable to provide a service to a remote user, such as UE 930 connecting via an OTT connection 950 terminating at the UE 930 and the host computer 910. In providing the service to the remote user, the host application 912 may provide user data which is transmitted using the OTT connection 950.

The communication system 900 further includes a base station 920 provided in a telecommunication system and comprising hardware 925 enabling it to communicate with the host computer 910 and with the UE 930. The hardware 925 may include a communication interface 926 for setting up and maintaining a wired or wireless connection with an interface of a different communication device of the communication system 900, as well as a radio interface 927 for setting up and maintaining at least a wireless connection 970 with the UE 930 located in a coverage area (not shown in Fig. 9) served by the base station 920. The communication interface 926 may be configured to facilitate a connection 960 to the host computer 910. The connection 960 may be direct or it may pass through a core network (not shown in Fig. 9) of the telecommunication system and/or through one or more intermediate networks outside the telecommunication system. In the embodiment shown, the hardware 925 of the base station 920 further includes a processing circuitry 928, which may comprise one or more programmable processors, application-specific integrated circuits, field programmable gate arrays or combinations of these (not shown) adapted to execute instructions. The base station 920 further has software 921 stored internally or accessible via an external connection.

The communication system 900 further includes the UE 930 already referred to. Its hardware 935 may include a radio interface 937 configured to set up and maintain a wireless connection 970 with a base station serving a coverage area in which the UE 930 is currently located. The hardware 935 of the UE 930 further includes a processing circuitry 938, which may comprise one or more programmable processors, application-specific integrated circuits, field programmable gate arrays or combinations of these (not shown) adapted to execute instructions. The UE 930 further comprises software 931, which is stored in or accessible by the UE 930 and executable by the processing circuitry 938. The software 931 includes a client application 932. The client application 932 may be operable to provide a service to a human or non-human user via the UE 930, with the support of the host computer 910. In the host computer 910, an executing host application 912 may communicate with the executing client application 932 via the OTT connection 950 terminating at the UE 930 and the host computer 910. In providing the service to the user, the client application 932 may receive request data from the host application 912 and provide user data in response to the request data. The OTT connection 950 may transfer both the request data and the user data. The client application 932 may interact with the user to generate the user data that it provides.

It is noted that the host computer 910, the base station 920 and the UE 930 illustrated in Fig. 9 may be similar or identical to the host computer 830, one of base stations 812a, 812b, 812c and one of UEs 891, 892 of Fig. 8, respectively. This is to say, the inner workings of these entities may be as shown in Fig. 9 and independently, the surrounding network topology may be that of Fig. 8.

In Fig. 9, the OTT connection 950 has been drawn abstractly to illustrate the communication between the host computer 910 and the UE 930 via the base station 920, without explicit reference to any intermediary devices and the precise routing of messages via these devices. Network infrastructure may determine the routing, which it may be configured to hide from the UE 930 or from the service provider operating the host computer 910, or both. While the OTT connection 950 is active, the network infrastructure may further take decisions by which it dynamically changes the routing (e.g., on the basis of load balancing consideration or reconfiguration of the network).

Wireless connection 970 between the UE 930 and the base station 920 is in accordance with the teachings of the embodiments described throughout this disclosure. One or more of the various embodiments improve the performance of OTT services provided to the UE 930 using the OTT connection 950, in which the wireless connection 970 forms the last segment. More precisely, the teachings of these embodiments may improve the radio resource utilization and thereby provide benefits such as reduced user waiting time.

A measurement procedure may be provided for the purpose of monitoring data rate, latency and other factors on which the one or more embodiments improve. There may further be an optional network functionality for reconfiguring the OTT connection 950 between the host computer 910 and the UE 930, in response to variations in the measurement results. The measurement procedure and/or the network functionality for reconfiguring the OTT connection 950 may be implemented in software 911 and hardware 915 of the host computer 910 or in software 931 and hardware 935 of the UE 930, or both. In embodiments, sensors (not shown) may be deployed in or in association with communication devices through which the OTT connection 950 passes; the sensors may participate in the measurement procedure by supplying values of the monitored quantities exemplified above, or supplying values of other physical quantities from which the software 911, 931 may compute or estimate the monitored quantities. The reconfiguring of the OTT connection 950 may include message format, retransmission settings, preferred routing etc.; the reconfiguring need not affect the base station 920, and it may be unknown or imperceptible to the base station 920. Such procedures and functionalities may be known and practiced in the art. In certain embodiments, measurements may involve proprietary UE signaling facilitating the host computer 910's measurements of throughput, propagation times, latency and the like. The measurements may be implemented in that the software 911 and 931 causes messages to be transmitted, in particular empty or 'dummy' messages, using the OTT connection 950 while it monitors propagation times, errors etc.

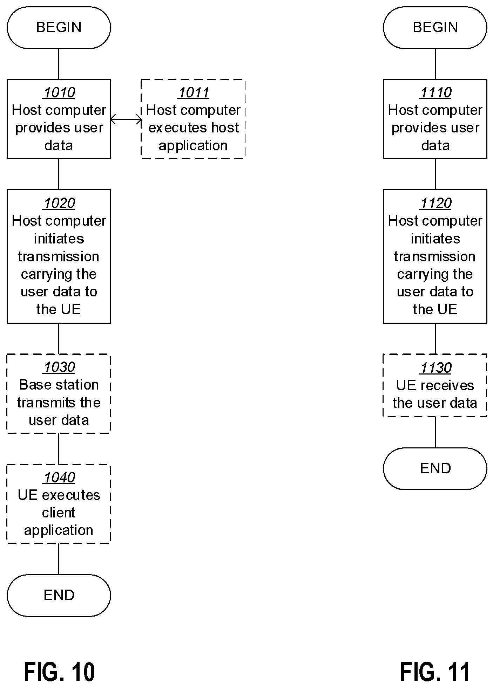

Fig. 10 is a flowchart illustrating a method implemented in a communication system, in accordance with an embodiment. The communication system includes a host computer, a base station and a UE which may be those described with reference to Fig. 8 and Fig. 9. For simplicity of the present disclosure, only drawing references to Fig. 10 will be included in this section. In step 1010, the host computer provides user data. In substep 1011 (which may be optional) of step 1010, the host computer provides the user data by executing a host application. In step 1020, the host computer initiates a transmission carrying the user data to the UE. In step 1030 (which may be optional), the base station transmits to the UE the user data which was carried in the transmission that the host computer initiated, in accordance with the teachings of the embodiments described throughout this disclosure. In step 1040 (which may also be optional), the UE executes a client application associated with the host application executed by the host computer.

Fig. 11 is a flowchart illustrating a method implemented in a communication system, in accordance with an embodiment. The communication system includes a host computer, a base station and a UE which may be those described with reference to Fig. 8 and Fig. 9. For simplicity of the present disclosure, only drawing references to Fig. 11 will be included in this section. In step 1110 of the method, the host computer provides user data. In an optional substep (not shown) the host computer provides the user data by executing a host application. In step 1120, the host computer initiates a transmission carrying the user data to the UE. The transmission may pass via the base station, in accordance with the teachings of the embodiments described throughout this disclosure. In step 1130 (which may be optional), the UE receives the user data carried in the transmission.

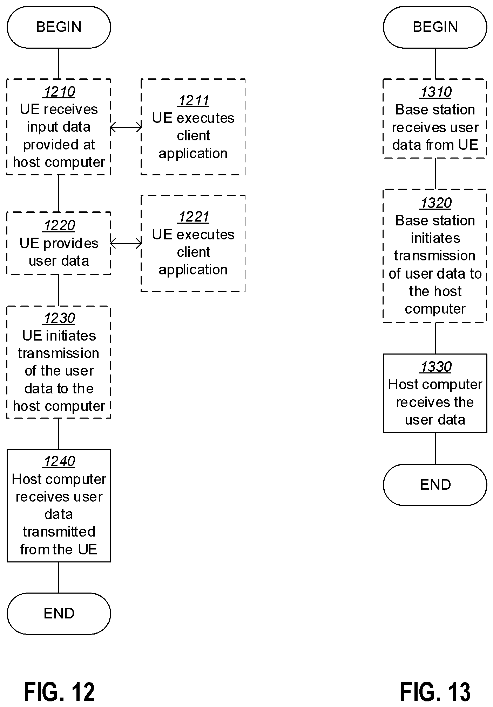

Fig. 12 is a flowchart illustrating a method implemented in a communication system, in accordance with an embodiment. The communication system includes a host computer, a base station and a UE which may be those described with reference to Fig. 8 and Fig. 9. For simplicity of the present disclosure, only drawing references to Fig. 12 will be included in this section. In step 1210 (which may be optional), the UE receives input data provided by the host computer. Additionally or alternatively, in step 1220, the UE provides user data. In substep 1221 (which may be optional) of step 1220, the UE provides the user data by executing a client application. In substep 1211 (which may be optional) of step 1210, the UE executes a client application which provides the user data in reaction to the received input data provided by the host computer. In providing the user data, the executed client application may further consider user input received from the user. Regardless of the specific manner in which the user data was provided, the UE initiates, in substep 1230 (which may be optional), transmission of the user data to the host computer. In step 1240 of the method, the host computer receives the user data transmitted from the UE, in accordance with the teachings of the embodiments described throughout this disclosure.

Fig. 13 is a flowchart illustrating a method implemented in a communication system, in accordance with an embodiment. The communication system includes a host computer, a base station and a UE which may be those described with reference to Fig. 8 and Fig. 9. For simplicity of the present disclosure, only drawing references to Fig. 13 will be included in this section. In step 1310 (which may be optional), in accordance with the teachings of the embodiments described throughout this disclosure, the base station receives user data from the UE. In step 1320 (which may be optional), the base station initiates transmission of the received user data to the host computer. In step 1330 (which may be optional), the host computer receives the user data carried in the transmission initiated by the base station.

The disclosure has been described above with reference to embodiments thereof. It should be understood that various modifications, alternations and additions can be made by those skilled in the art without departing from the scope of the disclosure. Therefore, the scope of the disclosure is not limited to the above particular embodiments but only defined by the claims as attached.

## Claims

1. A method (100) in a network node, comprising:
transmitting (110), to a terminal device, a first instruction to apply a first rank configuration;
receiving (120), from the terminal device, a first report containing a first rank value and a first channel quality indication; and
transmitting (130), to the terminal device, a second instruction to apply a second rank configuration in response to a mismatch between a Modulation and Coding Scheme, MCS, adjusted while transmitting data using the first rank value and the first channel quality indication, wherein the second rank configuration indicates that the first rank value is forbidden to be reported.

2. The method (100) of claim 1, wherein
the first rank configuration comprises a first Rank Indicator, RI, restriction, and the first instruction is an instruction to apply a first Channel State Information, CSI, report configuration containing the first RI restriction, and/or
the second rank configuration comprises a second RI restriction, and the second instruction is an instruction to apply a second CSI report configuration containing the second RI restriction; and optionally,
wherein the first instruction and/or the second instruction are transmitted via Radio Resource Control, RRC, signaling or Downlink Control Information, DCI; and optionally,
wherein the first report is a first CSI report, the first rank value is indicated by a first RI in the first CSI report, and the first channel quality indication is a first Channel Quality Indicator, CQI, index indicated by a first CQI in the first CSI report.

3. The method (100) of any of claims 1-2, wherein the mismatch comprises one or more of:
a difference between a code rate corresponding to the adjusted MCS and a code rate corresponding to the first channel quality indication exceeding a threshold,
a difference between a throughput corresponding to the adjusted MCS and a throughput corresponding to the first channel quality indication exceeding a threshold, or
a difference between a Signal to Interference plus Noise Ratio, SINR, corresponding to the adjusted MCS and an SINR corresponding to the first channel quality indication exceeding a threshold.

4. The method (100) of claim 3, wherein
when the code rate, throughput, or SINR corresponding to the adjusted MCS is higher than the code rate, throughput, or SINR corresponding to the first channel quality indication, the second rank configuration indicates that the terminal device is only allowed to report a rank value selected from a set of rank values higher than the first rank value, or
when the code rate, throughput, or SINR corresponding to the adjusted MCS is lower than the code rate, throughput, or SINR corresponding to the first channel quality indication, the second rank configuration indicates that the terminal device is only allowed to report a rank value selected from a set of rank values lower than the first rank value.

5. The method (100) of any of claims 1-4, further comprising:
receiving, from the terminal device, a second report containing a second rank value and a second channel quality indication; and
transmitting the second instruction to the terminal device periodically, when a spectral efficiency or throughput calculated based on the second channel quality indication and the second rank value is higher than a spectral efficiency or throughput calculated based on the adjusted MCS and the first rank value;
and optionally, wherein the second report is a second CSI report, the second rank value is indicated by a second RI in the second CSI report, and the second channel quality indication is a second CQI index indicated by a second CQI in the second CSI report.

6. The method (100) of any of claims 1-5, further comprising:
transmitting, to the terminal device, a number of rank configurations comprising the first rank configuration and the second rank configuration, via Radio Resource Control, RRC, signaling;
and optionally, wherein each of the number of rank configurations comprises an RI restriction and is transmitted in a CSI report configuration;
and optionally, further comprising: determining the number of rank configurations based on capability information of the terminal device.

7. The method (100) of any of claims 1-6, wherein the MCS is adjusted based on one or more Hybrid Automatic Repeat reQuest, HARQ, feedbacks from the terminal device.

8. A network node (500), comprising a transceiver (510), a processor (520) and a memory (530), the memory (530) comprising instructions executable by the processor (520) whereby the network node (500) is operative to:
transmit, to a terminal device, a first instruction to apply a first rank configuration;
receive, from the terminal device, a first report containing a first rank value and a first channel quality indication; and
transmit, to the terminal device, a second instruction to apply a second rank configuration in response to a mismatch between a Modulation and Coding Scheme, MCS, adjusted while transmitting data using the first rank value and the first channel quality indication, wherein the second rank configuration indicates that the first rank value is forbidden to be reported.

9. The network node (500) of claim 8, wherein the memory (530) further comprises instructions executable by the processor (520) whereby the network node (500) is operative to perform the method according to any of claims 2-7.

## Patentansprüche

1. Verfahren (100) in einem Netzwerkknoten, umfassend:
Übertragen (110) an eine Endgerätevorrichtung einer ersten Anweisung, um eine erste Rangkonfiguration anzuwenden;
Empfangen (120) von der Endgerätevorrichtung, eines ersten Berichts, der einen ersten Rangwert und eine erste Kanalqualitätsangabe enthält; und
Übertragen (130) an die Endgerätevorrichtung einer zweiten Anweisung, um eine zweite Rangkonfiguration als Reaktion auf eine Nichtübereinstimmung zwischen einem Modulations- und Codierungsystem, MCS, das beim Übertragen von Daten unter Verwendung des ersten Rangwerts und der ersten Kanalqualitätsangabe angepasst wird, anzuwenden, wobei die zweite Rangkonfiguration angibt, dass das Melden des ersten Rangwerts verboten ist.

2. Verfahren (100) nach Anspruch 1, wobei
die erste Rangkonfiguration eine erste Rangindikator-, RI-Einschränkung, umfasst, und die erste Anweisung eine Anweisung ist, um eine erste Kanalstatusinformations-, CSI-Berichtskonfiguration anzuwenden, welche die erste RI-Einschränkung enthält, und/oder
die zweite Rangkonfiguration eine zweite RI-Einschränkung umfasst und die zweite Anweisung eine Anweisung ist, um eine zweite CSI-Berichtskonfiguration anzuwenden, welche die zweite RI-Einschränkung enthält; und optional
wobei die erste Anweisung und/oder die zweite Anweisung über Radio-Resource-Control-, RRC-Signalisierung, oder Downlink-Control-Information, DCI, übertragen wird; und optional
wobei der erste Bericht ein erster CSI-Bericht ist, der erste Rangwert durch einen ersten RI in dem ersten CSI-Bericht angegeben wird, und die erste Kanalqualitätsangabe ein erster Kanalqualitätsindikator-, CQI-Indikator ist, der durch einen ersten CQI in dem ersten CSI-Bericht angegeben wird.

3. Verfahren (100) nach einem der Ansprüche 1-2, wobei die Nichtübereinstimmung eines oder mehr umfasst von:
einer Differenz zwischen einer Coderate, die dem angepassten MCS entspricht, und einer Coderate, die der ersten Kanalqualitätsangabe entspricht, die einen Schwellenwert überschreitet,
einer Differenz zwischen einem Durchsatz, der dem angepassten MCS entspricht, und einem Durchsatz, welcher der ersten Kanalqualitätsangabe entspricht, die einen Schwellenwert überschreitet, oder
einer Differenz zwischen einem Signal-Rausch-Verhältnis, SINR, das dem angepassten MCS entspricht, und einem SINR, das der ersten Kanalqualitätsangabe entspricht, die einen Schwellenwert überschreitet.

4. Verfahren (100) nach Anspruch 3, wobei
wenn die Coderate, der Durchsatz oder das SINR gemäß dem angepassten MCS höher ist als die Coderate, der Durchsatz oder SINR gemäß der ersten Kanalqualitätsangabe, die zweite Rangkonfiguration angibt, dass der Endgerätevorrichtung erlaubt ist, nur einen Rangwert zu melden, der aus einer Reihe von Rangwerten ausgewählt wird, die höher sind als der erste Rangwert, oder
wenn die Coderate, der Durchsatz oder das SINR gemäß dem angepassten MCS niedriger ist als die Coderate, der Durchsatz oder SINR gemäß der ersten Kanalqualitätsangabe, die zweite Rangkonfiguration angibt, dass der Endgerätevorrichtung erlaubt ist, nur einen Rangwert zu melden, der aus einer Reihe von Rangwerten ausgewählt wird, die niedriger sind als der erste Rangwert.

5. Verfahren (100) nach einem der Ansprüche 1-4, weiter umfassend:
Empfangen von der Endgerätevorrichtung eines zweiten Berichts, der einen zweiten Rangwert und eine zweite Kanalqualitätsangabe enthält; und
periodisch Übertragen der zweiten Anweisung an die Endgerätevorrichtung, wenn eine spektrale Effizienz oder ein Durchsatz, die/der basierend auf der zweiten Kanalqualitätsangabe und dem zweiten Rangwert berechnet wird, höher ist als eine spektrale Effizienz oder ein Durchsatz, die/der basierend auf dem angepassten MCS und dem ersten Rangwert berechnet wird;
und wobei der zweite Bericht optional ein zweiter CSI-Bericht ist, der zweite Rangwert durch einen zweiten RI in dem zweiten CSI-Bericht angegeben wird, und die zweite Kanalqualitätsangabe ein zweiter CQI-Index ist, der durch einen zweiten CQI in dem zweiten CSI-Bericht angegeben wird.

6. Verfahren (100) nach einem der Ansprüche 1-5, weiter Folgendes umfassend:
Übertragen an die Endgerätevorrichtung einer Anzahl an Rangkonfigurationen, welche die erste Rangkonfiguration und die zweite Rangkonfiguration umfassen, über Radio-Resource-Control-, RRC-Signalisierung;
und wobei optional jede der Anzahl an Rangkonfigurationen eine RI-Einschränkung umfasst und in einer CSI-Berichtskonfiguration übertragen wird;
und optional weiter umfassend: Bestimmen der Anzahl an Rangkonfigurationen basierend auf Fähigkeitsinformationen der Endgerätevorrichtung.

7. Verfahren (100) nach einem der Ansprüche 1-6, wobei das MCS basierend auf einer oder mehreren Hybrid-Automatic-Repeat-Request-, HARQ-Rückmeldungen, von der Endgerätevorrichtung angepasst wird.

8. Netzwerkknoten (500), der einen Sende-Empfänger (510), einen Prozessor (520) und einen Speicher (530) umfasst, wobei der Speicher (530) Anweisungen umfasst, die von dem Prozessor (520) ausführbar sind, wodurch der Netzwerkknoten (500) betreibbar ist, um:
an eine Endgerätevorrichtung eine erste Anweisung zu übertragen, um eine erste Rangkonfiguration anzuwenden;
von der Endgerätevorrichtung einen ersten Bericht zu empfangen, der einen ersten Rangwert und eine erste Kanalqualitätsangabe enthält; und
an die Endgerätevorrichtung eine zweite Anweisung zu übertragen, um eine zweite Rangkonfiguration als Reaktion auf eine Nichtübereinstimmung zwischen einem Modulations- und Codierungsystem, MCS, das beim Übertragen von Daten unter Verwendung des ersten Rangwerts und der ersten Kanalqualitätsangabe angepasst wird, anzuwenden, wobei die zweite Rangkonfiguration angibt, dass das Melden des ersten Rangwerts verboten ist.

9. Netzwerkknoten (500) nach Anspruch 8, wobei der Speicher (530) weiter von dem Prozessor (520) ausführbare Anweisungen umfasst, wodurch der Netzwerkknoten (500) betreibbar ist, um das Verfahren nach einem der Ansprüche 2-7 durchzuführen.

## Revendications

1. Procédé (100) dans un nœud de réseau, comprenant :
la transmission (110), à un dispositif terminal, d'une première instruction pour appliquer une configuration de premier rang ;
la réception (120), en provenance du dispositif terminal, d'un premier rapport contenant une valeur de premier rang et une première indication de qualité de canal ; et
la transmission (130), au dispositif terminal, d'une seconde instruction pour appliquer une configuration de second rang à la suite d'une discordance entre un schéma de modulation et de codage, MCS, ajusté lors de la transmission de données à l'aide de la valeur de première rang et de la première indication de qualité de canal, dans lequel la configuration de second rang indique que la valeur de premier rang ne peut pas être rapportée.

2. Procédé (100) selon la revendication 1, dans lequel
la configuration de premier rang comprend une première restriction d'indicateur de rang, RI, et la première instruction est une instruction pour appliquer une première configuration de rapport d'informations d'état de canal, CSI, contenant la première restriction de RI, et/ou
la configuration de second rang comprend une second restriction de RI, et la seconde instruction est une instruction pour appliquer une seconde configuration de rapport de CSI contenant la seconde restriction de RI ; et facultativement,
dans lequel la première instruction et/ou la seconde instruction sont transmises via une signalisation de commande de ressources radio, RRC, ou des informations de commande de liaison descendante, DCI ; et facultativement,
dans lequel le premier rapport est un premier rapport de CSI, la valeur de premier rang est indiquée par un premier RI dans le premier rapport de CSI, et la première indication de qualité de canal est un premier indice d'indicateur de qualité de canal, CQI, indiqué par un premier CQI dans le premier rapport de CSI.

3. Procédé (100) selon l'une quelconque des revendications 1-2, dans lequel la discordance comprend une ou plusieurs :
d'une différence entre un débit de code correspondant au MCS ajusté et un débit de code correspondant à la première indication de qualité de canal dépassant un seuil,
d'une différence entre un rendement correspondant au MCS ajusté et un rendement correspondant à la première indication de qualité du canal dépassant un seuil, ou
d'une différence entre un rapport signal sur interférence plus bruit, SINR, correspondant au MCS ajusté et un SINR correspondant à la première indication de qualité de canal dépassant un seuil.

4. Procédé (100) selon la revendication 3, dans lequel
lorsque le débit de code, le rendement ou le SINR correspondant au MCS ajusté est supérieur au débit de code, au rendement ou au SINR correspondant à la première indication de qualité de canal, la configuration de second rang indique que le dispositif terminal est uniquement autorisé à rapporter une valeur de rang sélectionnée parmi un ensemble de valeurs de rang supérieures à la première valeur de rang, ou
lorsque le débit de code, le rendement ou le SINR correspondant au MCS ajusté est inférieur au débit de code, au rendement ou au SINR correspondant à la première indication de qualité de canal, la configuration de second rang indique que le dispositif terminal est uniquement autorisé à rapporter une valeur de rang sélectionnée parmi un ensemble de valeurs de rang inférieures à la première valeur de rang.

5. Procédé (100) selon l'une quelconque des revendications 1-4, comprenant en outre :
la réception, en provenance du dispositif terminal, d'un second rapport contenant une valeur de second rang et une seconde indication de qualité de canal ; et
la transmission périodique de la seconde instruction au dispositif terminal, lorsqu'une efficacité spectrale ou un rendement calculé sur la base de la seconde indication de qualité de canal et de la valeur de second rang est supérieur à une efficacité spectrale ou un rendement calculé sur la base du MCS ajusté et de la valeur de premier rang ;
et, facultativement, dans lequel le second rapport est un second rapport de CSI, la valeur de second rang est indiquée par un second RI dans le second rapport de CSI et la seconde indication de qualité de canal est un second indice de CQI indiqué par un second CQI dans le second rapport de CSI.

6. Procédé selon l'une quelconque des revendications 1-5, comprenant en outre :
la transmission, au dispositif terminal, d'un certain nombre de configurations de rang comprenant la configuration de premier rang et la configuration de second rang, via la signalisation de commande des ressources radio, RRC ;
et, facultativement, dans lequel chacune du nombre de configurations de rang comprend une restriction de RI et est transmise dans une configuration de rapport de CSI ;
et facultativement comprenant en outre : la détermination du nombre de configurations de rang sur la base d'informations de capacité du dispositif terminal.

7. Procédé (100) selon l'une quelconque des revendications 1-6, dans lequel le MCS est ajusté sur la base d'une ou de plusieurs rétroactions de demande de répétition automatique hybride, HARQ, provenant du dispositif terminal.

8. Nœud de réseau (500), comprenant un émetteur-récepteur (510), un processeur (520) et une mémoire (530), la mémoire (530) comprenant des instructions exécutables par le processeur (520), selon lequel le nœud de réseau (500) est opérationnel pour :
transmettre, à un dispositif terminal, une première instruction pour appliquer une configuration de premier rang ;
recevoir, du dispositif terminal, un premier rapport contenant une valeur de premier rang et une première indication de qualité de canal ; et
transmettre, au dispositif terminal, une seconde instruction pour appliquer une configuration de second rang à la suite d'une discordance entre un schéma de modulation et de codage, MCS, ajusté lors de la transmission de données à l'aide de la valeur de première rang et de la première indication de qualité de canal, dans lequel la configuration de second rang indique que la valeur de premier rang ne peut pas être rapportée.

9. Nœud de réseau (500) selon la revendication 8, dans lequel la mémoire (530) comprend en outre des instructions exécutables par le processeur (520), selon lequel le nœud de réseau (500) est opérationnel pour réaliser le procédé selon l'une quelconque des revendications 2-7.
